# EUROPÄISCHE PATENTSCHRIFT

(11) **EP 1 485 283 B1**
(45) Veröffentlichungstag und Bekanntmachung des Hinweises auf die Patenterteilung: **07.09.2005**
(21) Anmeldenummer: 02779146.6
(22) Anmeldetag: 09.10.2002
(51) Int. Cl.: B62D 1/00

(54) **SPURWECHSELASSISTENT FÜR KRAFTFAHRZEUGE**
LANE-CHANGE ASSISTANT FOR MOTOR VEHICLES
DISPOSITIF D'ASSISTANCE AU CHANGEMENT DE VOIE POUR VEHICULES

(30) Priorität: 12.03.2002 DE 10210723
(43) Veröffentlichungstag der Anmeldung: 15.12.2004
(73) Patentinhaber: ROBERT BOSCH GMBH, 70442 Stuttgart (DE)
(72) Erfinder: BOECKER, Juergen, 70499 Stuttgart (DE); BRAEUCHLE, Goetz, 74934 Reichartshausen (DE)
(86) Internationale Anmeldenummer: PCT/DE2002/003808
(87) Internationale Veröffentlichungsnummer: WO 2003/076249

(56) Entgegenhaltungen:
- DE-A- 19 725 656
- US-A1- 2001 018 641

## Beschreibung

### STAND DER TECHNIK

Die Erfindung einen Spurwechselassistenten, der im Rahmen eines Querführungssystems für Kraftfahrzeuge auf einen Befehl des Fahrers hin einen automatischen Wechsel des Fahrzeugs auf eine Nachbarspur steuert und ein entgegengesetzte Richtungen aus einer Neutralstellung bewegbares Bedienelement aufweist.

In Kraftfahrzeugen werden zunehmend Systeme eingesetzt, die den Fahrer bei der Fahrzeugführung unterstützen oder ihm spezielle Fahrmanöver erleichtern (Advanced Driver Assistance Systems; ADAS). Eine Funktion dieser Systeme ist die Querführungsunterstützung (Lane Keeping Support; LKS). Dabei wird die Ist-Position des Fahrzeugs relativ zu der befahrenen Fahrspur ermittelt und mit einem Sollwert verglichen, der typischerweise der Mitte der Spur entspricht. Das Ausgangssignal besteht dann in einem Stellsignal für einen Aktor, der in das Lenkungssystem des Fahrzeugs eingreift, sei es um den Fahrer durch ein zusätzliches Lenkdrehmoment zu unterstützen oder um eine völlig autonome Querführung durchzuführen, die keinen Eingriff des Fahrers mehr erfordert.

Ergänzend zu dieser Querführungsunterstützung, die dazu dient, die derzeit befahrene Spur beizubehalten, sind Spurwechselassistenten bekannt, die durch einen Befehl des Fahrers aktiviert werden, beispielsweise wenn ein Überholvorgang eingeleitet oder beendet werden soll, und die dann den Fahrer bei dem Spurwechsel unterstützen oder diesen Spurwechsel automatisch steuern. Ein solches System ist in DE 197 25 656 offenbart. Das Bedienelement dient zur Eingabe des Spurwechselbefehls. Nachdem der Spurwechselbefehl eingegeben wurde, läuft im automatischen Betrieb der Spurwechselvorgang gemäß einem fest vorgegebenen Programm ab, das jedoch häufig nicht den tatsächlichen Wünschen des Fahrers entspricht.

### AUFGABE, LÖSUNG UND VORTEILE DER ERFINDUNG

Aufgabe der Erfindung ist es, einen Spurwechselassistenten zu schaffen, bei dem der Ablauf des Spurwechselvorgangs besser an die Wünsche des Fahrers angepaßt werden kann.

Diese Aufgabe wird erfindungsgemäß dadurch gelöst, daß dem Bedienelement für jede Verstellrichtung ein Sensor zugeordnet ist, der ein der Betätigung des Bedienelements entsprechendes mehrwertiges Ausgangssignal liefert, das die Dynamik des Spurwechselvorgangs bestimmt.

Der Begriff "Dynamik des Spurwechselvorgangs" bezieht sich auf die Geschwindigkeit, mit der der Spurwechsel vollzogen wird. Bei geringer Dynamik erstreckt sich der Spurwechselvorgang über einen längeren Zeitraum, und der Lenkeinschlag bleibt relativ gering, so daß die beim Spurwechsel auftretenden Querbeschleunigungen des Fahrzeugs entsprechend niedrig bleiben. Dies ermöglicht einen Spurwechsel mit hohem Komfort in Verkehrssituationen, in denen ausreichend Zeit für den Spurwechsel zur Verfügung steht. In anderen Verkehrssituationen, beispielsweise wenn ein vorausfahrendes, zu überholendes Fahrzeug plötzlich bremst, ist dagegen eine höhere Dynamik des Spurwechselvorgangs erforderlich, d.h. das Fahrzeug wechselt schneller auf die Nebenspur, und es treten entsprechend höhere Querbeschleunigungen auf. Die Erfindung bietet dem Fahrer die Möglichkeit, durch die Art und Weise, wie er das Bedienelement betätigt, die Dynamik des Spurwechselvorgangs nach Wunsch zu dosieren.

Bei den mehrwertigen Ausgangssignalen der Sensoren, die dem Bedienelement zugeordnet sind, kann es sich um analoge Signale oder auch um mehrwertige digitale Signale handeln, die den Verstellweg, die Verstellkraft oder das Drehmoment repräsentieren, das der Fahrer auf das Bedienelement ausübt.

Das Querführungsunterstützungssystem besteht im Kern aus einem elektronischen Regler, der von einer Sensoreinrichtung, beispielsweise einem elektronischen Kamerasystem, ein Signal erhält, das die Ist-Position des Fahrzeugs relativ zu den Grenzen der befahrenen Fahrspur repräsentiert. Der Regler vergleicht die Ist-Position mit einem Sollwert, der beispielsweise der Spurmitte entspricht, und gibt als Ausgangssignal einen Stellbefehl an ein Lenkungsstellglied des Fahrzeugs aus, so daß die Querposition des Fahrzeugs auf den Sollwert eingeregelt wird. Die Hauptkomponente des Spurwechselassistenten ist ein durch Software und/oder Hardware gebildetes Funktionsmodul dieses Reglers, das den Sollwert sprunghaft oder stetig auf einen der Nebenspur entsprechenden Wert ändert. Ergänzend können Steuerungskomponenten vorgesehen sein, mit denen der vom Regler ausgegebene Stellbefehl modifiziert wird, um in der Übergangsphase während des Spurwechsels die Lenkbewegungen bzw. die Querposition des Fahrzeugs zu steuern.

Die Dynamik des Spurwechselvorgangs kann auf verschiedene Weise beeinflußt werden, beispielsweise über die Geschwindigkeit, mit der der Sollwert verändert wird, durch Begrenzung des Lenkeinschlags, der durch das Ausgangssignal des Reglers bestimmt wird, oder durch direkte Modifikation dieses Ausgangssignals. Häufig ist der Regelalgorithmus für die Querführungsunterstützung so ausgelegt, daß eine gemessene Soll/Ist-Abweichung innerhalb einer bestimmten Fahrtstrecke, der sogenannten Vorausschauweite, auf null zurückgeführt wird. Die Vorausschauweite ist zumeist geschwindigkeitsabhängig und wird deshalb bevorzugt in der Form einer Zeitlücke, der Vorausschauzeit, angegeben, die gleich dem Quotienten aus Vorausschauweite und Absolutgeschwindigkeit des Fahrzeugs ist. Je kleiner die Vorausschauzeit ist, desto heftiger muß der Lenkausschlag ausfallen, um die Querposition des Fahrzeugs innerhalb dieser Vorausschauzeit wieder auf den Sollwert zu regeln. Wenn nun durch den Querführungsassistenten der Sollwert verändert wird, läßt folglich eine hohe Dynamik des Spurwechselvorgangs durch Wahl einer kleinen Vorausschauzeit erreichen.

Vorteilhafte Ausgestaltungen der Erfindung ergeben sich aus den Unteransprüchen.

Das Bedienelement wird bevorzugt durch einen Hebel gebildet, der so am Lenkrad angeordnet ist, daß der Fahrer bei der Betätigung dieses Hebels die Hände am Lenkrad behalten kann. In einer besonders bevorzugten Ausführungsform handelt es sich bei diesem Hebel um den Blinkschalter des Fahrzeugs. Der Verstellweg eines Blinkschalters wird üblicherweise in jeder Richtung durch einen Anschlag begrenzt. Jedem Anschlag ist ein Druckpunkt vorgelagert, der überwunden werden muß, damit der Blinkschalter in der Einschaltposition einrastet und dann eingeschaltet bleibt, bis die Lenkung wieder in die Neutralposition zurückgestellt wurde. Die Sensoren, die die vom Fahrer gewünschte Dynamik erfassen, sind bevorzugt an den Anschlägen angeordnet und messen beispielsweise die Kraft, mit der der Fahrer den Hebel gegen den Anschlag drückt.

Wenn der Fahrer einen Spurwechsel beabsichtigt und sich davon überzeugt hat, daß die Verkehrssituation dies erlaubt, wird er durch Betätigung des Blinkschalters zunächst die Spurwechselabsicht für andere Verkehrsteilnehmer anzeigen. Wenn er dann den Blinkschalter über den Druckpunkt hinaus gegen den Anschlag bewegt, so wird der Spurwechselassistent aktiviert, und zugleich wird anhand der vom Sensor gemessenen Betätigungskraft die Dynamik des Spurwechsels bestimmt. Der weitere Ablauf des Spurwechsels kann dann automatisch vom Spurwechselassistenten gesteuert werden. Wenn der Spurwechselvorgang abgeschlossen ist, kehrt der Blinkschalter wie üblich selbsttätig in die Neutralstellung zurück.

In einer modifizierten Ausführungsform ist es auch möglich, die Sensoren an den Druckpunkten des Blinkschalters anzuordnen.

In einer bevorzugten Ausführungsform wird die von den Sensoren gemessene Betätigungskraft zeitaufgelöst ausgewertet, und der Lenkeinschlag wird entsprechend der gemessenen Betätigungskraft variiert. Auf diese Weise behält der Fahrer zumindest in der Anfangsphase des Spurwechselvorgangs die Kontrolle, so daß er den Spurwechselvorgang je nach Wunsch beschleunigen, verzögern oder auch ganz abbrechen kann. In der Endphase des Spurwechselvorgangs, etwa von dem Zeitpunkt an, an dem die Mitte des Fahrzeugs auf die andere Spur wechselt, setzt dagegen wieder bevorzugt die automatische Regelung ein, so daß die Querposition des Fahrzeugs dann unabhängig von der Betätigung des Bedienelements auf die Mitte der neuen Spur geregelt wird. Erforderlichenfalls kann der Fahrer den Spurwechselvorgang dann immer noch abbrechen, indem er das Bedienelement in der entgegengesetzten Richtung betätigt.

In einer modifizierten Ausführungsform wird der Spurwechselvorgang von Anfang an automatisch gesteuert und die Dynamik wird bei Betätigung des Bedienelements bestimmt, beispielsweise anhand des Maximalwertes des Sensorsignals, und bleibt dann für den gesamten Spurwechselvorgang gültig. Statt die auf den Sensor ausgeübte Kraft zumessen, kann es in diesem Fall zweckmäßiger sein, die Zeit zu messen, während der der Fahrer das Bedienelement gegen den Anschlag drückt. So kann der Fahrer durch kurzes Antippen des Bedienelements einen langsamen Spurwechsel auslösen. Wenn er einen rascheren Spurwechsel wünscht, hält er das Bedienelement entsprechend länger in der Anschlagposition. Gemäß einer weiteren Abwandlung ist es denkbar, anstelle des Anschlags mehrere gestaffelte Druckpunkte vorzusehen, wobei die Überwindung jedes Druckpunkts einem Spurwechsel mit höherer Dynamik entspricht.

Die mit Hilfe des Bedienelements und der Sensoren gewonnene Information über den Spurwechselwunsch des Fahrers kann, vorzugsweise in digitaler Form über einen Daten-Bus, beispielsweise einen CAN-Bus, auch an andere Systemkomponenten des Fahrzeugs übermittelt werden und läßt sich dann beispielsweise dazu nutzen, im Rahmen einer radargestützten Abstandsregelung den Ortungsbereich des Radars entsprechend dem Spurwechsel anzupassen und/oder in das zu dem ADAS-System gehörende Längsführungssystem des Fahrzeugs einzugreifen und - etwa bei einem Überholvorgang - die Fahrgeschwindigkeit zu erhöhen.

Im folgenden werden ein Ausführungsbeispiele anhand der Zeichnungen näher erläutert.

### KURZBESCHREIBUNG DER ZEICHNUNGEN

### Es zeigen:

- Fig. 1: ein Blockdiagramm eines Querführungssystems für ein Kraftfahrzeug; und
- Fig. 2: eine Schematische Darstellung eines Bedienelements für den Spurwechselassistenten.

### BESCHREIBUNG VON AUSFÜHRUNGSBEISPIELEN

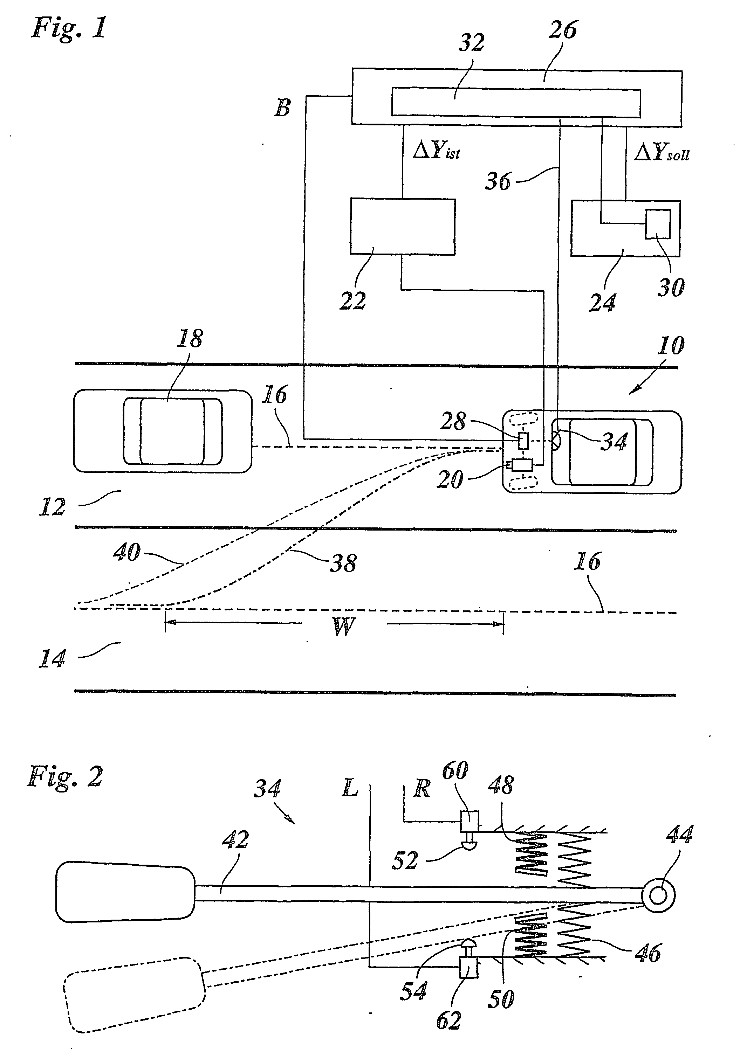

In Figur 1 ist schematisch in der Draufsicht ein Fahrzeug 10 dargestellt, das auf der rechten Spur 12 einer Fahrbahn fährt, die außerdem eine Überholspur 14 aufweist. Die Spurmitte 16 ist jeweils durch eine gestrichelte Linie angegeben. Das Fahrzeug 10 setzt gerade zum Überholen eines vorausfahrenden Fahrzeugs 18 an.

Das Fahrzeug 10 ist mit einem ADAS-System ausgerüstet, das als Teilsystem ein Querführungssystem mit den folgenden, in Form eines Blockdiagramms dargestellten Komponenten umfaßt: eine durch eine Videokamera 20 und eine Bildverarbeitungseinheit 22 gebildete Sensoreinrichtung, eine Vorgabeeinrichtung 24 zur Vorgabe eines Sollwertes ΔYₛₒₗₗ für die Querposition des Kraftfahrzeugs 10, eine Regeleinrichtung 26 und ein Lenkungsstellglied 28, das durch ein Befehlssignal B der Regeleinrichtung 26 angesteuert wird und in die Fahrzeuglenkung eingreift, um die Querposition des Fahrzeugs 10 auf den Sollwert zu regeln.

Die Ist-Position des Fahrzeugs in der Richtung quer zu seiner Längsachse wird im gezeigten Beispiel mit der durch die Videokamera 20 und die Bildverarbeitungseinheit 22 gebildeten Sensoreinrichtung erfaßt. Dazu wertet die Bildverarbeitungseinheit 22 das von der Kamera aufgenommene Videobild aus, um die Grenzen der Spuren 12, 14 und die Lage des Kraftfahrzeugs 10 relativ zu diesen Grenzen zu erkennen. Diese Ausführungsform der Sensoreinrichtung ist lediglich als Beispiel zu verstehen und kann beispielsweise durch Magnetsensoren ersetzt werden, die magnetische Markierungen für die Fahrbahngrenzen erfassen. Ebenso könnten die Fahrbahngrenzen auch mit Hilfe von Reflektoren markiert werden, die von einem Radarsystem des Fahrzeugs erfaßt werden.

Wenn die Lage der Spurgrenzen relativ zum Kraftfahrzeug 10 bekannt ist, läßt sich aus diesen Daten auch die Breite der Spur 12 sowie die Lage der Spurmitte 16 ermitteln. Die Sensoreinrichtung ist daher in der Lage, die Ist-Position des Kraftfahrzeugs 10, ausgedrückt durch einen Ist-Wert ΔYᵢₛₜ für die laterale Abweichung von der Spurmitte, an die Regeleinrichtung 26 zu übermitteln. Anhand eines Vergleichs des Ist-Wertes ΔYᵢₛₜ mit dem Sollwert ΔYₛₒₗₗ bildet die Regeleinrichtung 26 dann das Befehlssignal B, das an das Lenkungsstellglied 28 übermittelt wird. Der Sollwert ΔYₛₒₗₗ wird ebenfalls als laterale Abweichung von der Spurmitte 16 ausgedrückt. Beispielsweise entsprechen positive Werte von ΔYₛₒₗₗ einer Abweichung nach rechts von der Spurmitte und negative Werte einer Abweichung nach links von der Spurmitte. Die Vorgabeeinrichtung 24 enthält einen Speicher 30, in dem der jeweils gültige Sollwert gespeichert ist.

Die Regeleinrichtung 26 enthält als ein spezielles Funktionsmodul einen Spurwechselassistenten 32, der mit Hilfe eines am Lenkrad des Fahrzeugs 10 angeordneten Bedienelements 34 aktiviert wird, mit dem er über einen CAN-Bus 36 verbunden ist. Wenn der Fahrer über das Bedienelement 34 den Befehl eingibt, auf die Spur 14 zu wechseln, so ersetzt der Spurwechselassistent 32 den bisher im Speicher 30 gespeicherten Sollwert durch einen neuen Sollwert, der der Spurmitte 16 der Spur 14 entspricht. Die Querposition des Fahrzeugs 10 wird dann auf den neuen Sollwert geregelt, so daß das Fahrzeug auf die Spur 14 wechselt und dabei beispielsweise einem der in Fig. 1 strichpunktiert eingezeichneten Kurse 38, 40 folgt. Der Kurs 38 zeichnet sich durch eine relativ hohe Dynamik aus, so daß der Spurwechsel in verhältnismäßig kurzer Zeit und auf einer entsprechend kurzen Strecke vollendet wird, während der Kurs 40 eine geringere Dynamik aufweist.

Mit Hilfe des Bedienelements 34, das in Fig. 2 näher dargestellt ist, kann der Fahrer die Dynamik des Spurwechsels beeinflussen.

Das Bedienelement 34 weist als Hauptkomponenten einen in ergonomisch günstiger Position am Lenkrad des Fahrzeugs angeordneten Hebel 42 auf, der zugleich den Blinkschalter des Fahrzeugs bildet. Der Hebel 42 ist um einen Gelenkpunkt 44 schwenkbar und wird elastisch in der in Fig. 2 in durchgezogenen Linien dargestellten Neutralstellung gehalten, wie durch eine Feder 46 symbolisiert wird. Zwei stärkere Federn 48, 50 bilden jeweils einen Druckpunkt für die Dauereinschaltung des rechten bzw. linken Blinkers. Nach Überwindung des Druckpunktes wird der Schwenkbereich des Hebels 42 in jeder Richtung durch einen Anschlag 52 bzw. 54 begrenzt, dem jeweils ein Sensor 60 bzw. 62 zugeordnet ist. Die Sensoren 60, 62 messen die Kraft, mit der der Hebel 42 vom Fahrer gegen den betreffenden Anschlag 52 oder 54 gedrückt wird, und liefern entsprechende Signale L, R über den CAN-Bus an den Spurwechselassistenten 32. Das Signal L bzw. R bewirkt zunächst die Änderung des Sollwertes im Speicher 30. Darüber hinaus gibt die Stärke des jeweiligen Signals die Geschwindigkeit an, mit der der Spurwechsel vollzogen wird.

In Fig. 1 ist mit W eine Vorausschauweite bezeichnet, die das Verhalten der Regeleinrichtung 26 bestimmt. Die Regeleinrichtung ist so ausgebildet, daß die Ist-Position des Fahrzeugs 10 innerhalb einer bestimmten Vorausschauzeit mit dem Soll-Wert in Übereinstimmung gebracht wird. Das Produkt aus dieser Vorausschauzeit und der Geschwindigkeit des Fahrzeugs 10 ergibt die Vorausschauweite W, die somit von der Geschwindigkeit des Fahrzeugs abhängig ist. Wenn der Fahrer in der in Fig. 1 gezeigten Situation den Hebel 42 gegen den Anschlag 54 drückt, so wechselt der im Speicher 30 gespeicherte Sollwert von der Mitte der Spur 12 auf die Mitte der Spur 14, und innerhalb der Vorausschauweite W wird die Ist-Position des Fahrzeugs an den neuen Sollwert angepaßt. Auf diese Weise ergibt sich der Kurs 38 in Fig. 1.

Der Spurwechselassistent 32 ist im gezeigten Beispiel so ausgebildet, daß er die Vorausschauzeit und damit auch die Vorausschauweite W in Abhängigkeit von der durch die Stärke des Signals L bzw. R repräsentierten Kraft variiert, mit der der Fahrer den Hebel 42 gegen den jeweiligen Anschlag drückt. Wenn der Fahrer den Hebel 42 mit schwächerer Kraft gegen den Anschlag 54 drückt, so ergibt sich eine längere Vorausschauzeit und eine größere Vorausschauweite, so daß das Fahrzeug 10 dann beispielsweise dem Kurs 40 folgt.

Während der ersten Hälfte des Spurwechselvorgangs, also etwa bis zu dem Punkt, an dem das Fahrzeug 10 die Grenze zwischen den Spuren 12, 14 überquert, wird die Vorausschauzeit fortlaufend an die vom Fahrer auf den Hebel 42 ausgeübte Kraft angepaßt, so daß der Fahrer den genauen Kursverlauf nach Wunsch bestimmen kann. Wenn der Fahrer in dieser Phase den Hebel 42 losläßt, wird der ursprüngliche, der Mitte der Spur 12 entsprechende Sollwert wiederhergestellt, d.h. der Spurwechsel wird abgebrochen. Wenn der Fahrer den Hebel 42 am Anschlag 54 hält, bis die Spurgrenze überquert wurde, so wird der Spurwechselvorgang automatisch vollendet. Der Sollwert bleibt auf dem Wert, der der Mitte der Spur 14 entspricht, und die Vorausschauzeit wird wieder auf den Standardwert gesetzt, so daß sich das Fahrzeug 10 sanft, ohne übermäßige Querbeschleunigungen auf der Mitte der neuen Spur 14 einfädelt.

In einer modifizierten Ausführungsform wird der Spurwechselvorgang mit der Vorausschauzeit vollendet, die dem Maximalwert der auf den Hebel 42 ausgeübten Kraft entspricht.

Wenn der Fahrer den Spurwechselvorgang abbrechen möchte, nachdem bereits die Grenze zwischen den Spuren 12, 14 überschritten wurde, kann dies dadurch bewirkt werden, daß der Hebel 42 gegen den anderen Anschlag 52 gedrückt wird. Wahlweise kann das System auch so ausgelegt sein, daß der Spurwechselvorgang generell nur auf diese Weise abgebrochen werden kann. Da in diesem Falle beim Abbruch des Spurwechselvorgangs (nach links) auch der rechte Blinker betätigt wird, ist zugleich sichergestellt, daß der übrige Verkehr über die geänderte Absicht des Fahrers informiert wird.

Statt über die Vorausschauzeit und die Vorausschauweite W kann die Dynamik des Spurwechselvorgangs in anderen Ausführungsformen auch auf andere Weise beeinflußt werden, beispielsweise indem das Signal L bzw. R die Geschwindigkeit bestimmt, mit der der Sollwert allmählich von der Mitte der Spur 12 auf die Mitte der Spur 14 wandert, oder indem das Signal L bzw. R unmittelbar den Lenkeinschlag bestimmt, der durch das Lenkungsstellglied 28 bewirkt wird. Im letzteren Fall wird die Regelfunktion der Regeleinrichtung 26 während der ersten Phase des Spurwechselvorgangs ausgesetzt und durch eine Steuerung ersetzt, und die Regelung wird erst dann wieder aufgenommen, wenn das Fahrzeug die Spurgrenze überquert hat.

## Patentansprüche

1. Spurwechselassistent für Kraftfahrzeuge, der im Rahmen eines Querführungssystems (22, 24, 26, 28) des Fahrzeugs (10) auf einen Befehl des Fahrers hin einen automatischen Wechsel des Fahrzeugs auf eine Nachbarspur (14) steuert und ein in entgegengesetzte Richtungen aus einer Neutralstellung bewegbares Bedienelement (34) aufweist, **dadurch gekennzeichnet, daß** dem Bedienelement (34) für jede Verstellrichtung ein Sensor (60, 62) zugeordnet ist, der ein der Betätigung des Bedienelements entsprechendes mehrwertiges Ausgangssignal (L, R) liefert, das die Dynamik des Spurwechselvorgangs bestimmt.

2. Spurwechselassistent nach Anspruch 1, **dadurch gekennzeichnet, daß** das Bedienelement (34) einen Hebel (42) aufweist und daß der Sensor (60, 62) dazu ausgebildet ist, die Kraft zu messen, mit der der Hebel (42) gegen einen Anschlag (52, 54) oder einen Druckpunkt [48, 50] gedrückt wird.

3. Spurwechselassistent nach Anspruch 2, **dadurch gekennzeichnet, daß** der Hebel (42) zugleich einen Blinkschalter des Kraftfahrzeugs bildet.

4. Spurwechselassistent nach einem der vorstehenden Ansprüche, **dadurch gekennzeichnet, daß** der Sensor (60, 62) dazu ausgebildet ist, die Betätigung des Bedienelements (34) zeitaufgelöst zu messen und als mehrwertiges Ausgangssignal ein zeitaufgelöstes Signal zu liefern, daß die Stärke des Eingriffs in die Lenkung des Fahrzeugs (10) bestimmt.

5. Spurwechselassistent nach einem der vorstehenden Ansprüche, **dadurch gekennzeichnet, daß** er in eine Regeleinrichtung (26) integriert ist, die die Querposition des Fahrzeugs (10) auf einen Sollwert (ΔYₛₒₗₗ) regelt, und daß der Spurwechselassistent (32) dazu ausgebildet ist, als Reaktion auf das Ausgangssignal (L, R) eines der Sensoren (60, 62) den Sollwert zu ändern.

6. Spurwechselassistent nach Anspruch 5, **dadurch gekennzeichnet, daß** er dazu ausgebildet ist, die Signale (L, R) der Sensoren (60, 62) nur während einer Anfangsphase des Spurwechselvorgangs auszuwerten und dann die Kontrolle an die Regeleinrichtung (26) zu übergeben.

## Claims

1. Lane-change assistance system for motor vehicles, which, within the scope of a lateral movement control system (22, 24, 26, 28) of the vehicle (10), controls an automatic lane-change of the vehicle onto an adjacent lane (14) in response to an instruction from the driver and has an operator-controlled element (34) which can be moved out of a neutral position in opposite directions, **characterized in that** the operator-controlled element (34) is assigned a sensor (60, 62) for each adjustment direction, which sensor (60, 62) supplies a multi-value output signal (L, R) which corresponds to the activation of the operator-controlled element and which determines the dynamics of the lane-change process.

2. Lane-change assistance system according to Claim 1, **characterized in that** the operator-controlled element (34) has a lever (42), and **in that** the sensor (60, 62) is designed to measure the force with which the lever (42) is pressed against a stop (52, 54) or a pressure point (48, 50).

3. Lane-change assistance system according to Claim 2, **characterized in that** the lever (42) at the same time forms a flashing indicator light of the motor vehicle.

4. Lane-change assistance system according to one of the preceding claims, **characterized in that** the sensor (60, 62) is designed to measure the activation of the operator-controlled element (34) with time resolution and to supply, as a multi-value output signal a signal which has time resolution and which determines the degree of intervention in the steering of the vehicle (10).

5. Lane-change assistance system according to one of the preceding claims, **characterized in that** it is integrated into a control device (26) which adjusts the lateral position of the vehicle (10) to a setpoint value (ΔYₛₑₜₚ), and **in that** the lane-change assistance system (32) is designed to change the setpoint value in reaction to the output signal (L, R) of one of the sensors (60, 62).

6. Lane-change assistance system according to Claim 5, **characterized in that** it is designed to evaluate the signals (L, R) of the sensors (60, 62) only during an initial phase of the lane-change process and then to transfer control to the control device (26).

## Revendications

1. Dispositif d'assistance au changement de voie pour véhicules automobiles, qui dans le cadre d'un système de guidage transversal (22, 24, 26, 28) du véhicule (10) commande un changement automatique du véhicule sur une voie voisine (14) suite à un ordre du conducteur et présente un élément de service (34) déplaçable depuis une position neutre dans des directions opposées,
**caractérisé en ce qu'**
un capteur (60, 62), qui fournit un signal de sortie (L, R) multivalent déterminant la dynamique du processus de changement de voie et correspondant à l'actionnement de l'élément de service, est associé à l'élément de service (34) pour chaque direction de déplacement.

2. Dispositif d'assistance au changement de voie selon la revendication 1,
**caractérisé en ce que**
l'élément de service (34) présente un levier (42) et le capteur (60, 62) est conçu pour mesurer la force par laquelle le levier (42) est poussé contre une butée (52, 54) ou un point de pression (48, 50).

3. Dispositif d'assistance au changement de voie selon la revendication 2,
**caractérisé en ce que**
le levier (42) forme en même temps un commutateur clignotant du véhicule automobile.

4. Dispositif d'assistance au changement de voie selon l'une quelconque des revendications précédentes,
**caractérisé en ce que**
le capteur (60, 62) est conçu pour mesurer l'actionnement de l'élément de service (34) de façon résolue dans le temps et fournir un signal résolu dans le temps en tant que signal de sortie multivalent qui détermine l'importance de l'intervention dans la direction du véhicule (10).

5. Dispositif d'assistance au changement de voie selon l'une quelconque des revendications précédentes,
**caractérisé en ce qu'**
il est intégré dans un système de régulation (26) qui régule la position transversale du véhicule (10) sur une valeur de consigne (ΔY_{consigne}), et le dispositif d'assistance au changement de voie (32) est conçu pour modifier la valeur de consigne en réaction au signal de sortie (L, R) de l'un des capteurs (60, 62).

6. Dispositif d'assistance au changement de voie selon la revendication 5,
**caractérisé en ce qu'**
il est conçu pour n'exploiter les signaux (L, R) des capteurs (60, 62) que pendant une phase initiale du processus de changement de voie et transférer ensuite le contrôle au dispositif de régulation (26).
